# EUROPEAN PATENT APPLICATION

(11) **EP 4 714 744 A1**
(43) Date of publication of application: **25.03.2026**
(21) Application number: 24844345.9
(22) Date of filing: 17.05.2024
(51) Int. Cl.: B60Q 1/14

(54) **VEHICLE HIGH AND LOW BEAM CONTROL SYSTEM AND CONTROL METHOD, AND VEHICLE**

(30) Priority: 26.07.2023 CN 202310921955
(71) Applicant: Hasco Vision Technology Co., Ltd., Jiading District Shanghai 201821 (CN)
(72) Inventor: AO, Jinlong, Shanghai 201821 (CN); LI, Zhibing, Shanghai 201821 (CN); CHEN, Yanheng, Shanghai 201821 (CN); ZHANG, Jie, Shanghai 201821 (CN); CHEN, Jiayuan, Shanghai 201821 (CN)
(74) Representative: SSM Sandmair
(86) International application number: PCT/CN2024/093943
(87) International publication number: WO 2025/020649

(57) **Abstract**

Disclosed are a vehicle high beam and low beam control system and control method, and a vehicle. The control system comprises a signal receiving module, a light source module, and a control module, the signal receiving module is configured to receive an indication signal for enabling or disabling a high/low beam function, and the control module is connected to the signal receiving module, so as to execute, on the basis of the indication signal, an operation of enabling or disabling the high/low beam function: the light source module comprises a low-beam circuit and a high-beam circuit, and the low-beam circuit comprises a main low-beam circuit and an auxiliary low-beam circuit; the control module is separately connected to the low-beam circuit and the high-beam circuit, and when the indication signal received by the signal receiving module is to enable the high-beam function, the control module controls the high-beam circuit and at least one low-beam circuit to be switched on, and controls at least one main low-beam circuit to be disconnected. The control system can reduce the offset of the Eₘₐₓ value of a high-beam pattern. is more conducive to meeting the requirement that the brightness of the HV point of the high-beam pattern is greater than 80% of the Eₘₐₓ value. and can also reduce the high-beam power.

## Description

### CROSS REFERENCE TO RELATED APPLICATIONS

The present application claims the benefits of China Patent Application No. 202310921955.X filed on Jul. 26, 2023, the content of which is incorporated herein by reference.

### FIELD

The present disclosure relates to vehicle lamp control, in particular to a vehicle high beam and low beam control system, a control method and a vehicle.

### BACKGROUND

Vehicle headlamps are categorized into low beam illumination and high beam illumination functions. The low beam illumination is mainly intended to meet the requirements for coverage of the illumination range and brightness of illumination, while avoiding affecting other vehicles on the road, i.e., avoiding dazzling the drivers of other vehicles on the road and causing compromised driving safety. The high beam illumination is turned on when there is no other vehicle on the road or other vehicles on the road are far away, so as to provide illumination in a longer range. In the design of existing vehicle lamp devices, the requirements for high beam are also different from the requirements for low beam in applicable regulations and standards. It is required that the high beam may provide focused light to attain a purpose of illumination in a long range while the low beam may provide diffused light to attain a purpose of providing abroad vision in a short range.

In the ex-factory inspection of vehicle lamps, the low beam light pattern and the high beam light pattern are tested respectively, and only vehicle lamps that comply with the specifications are allowed to be shipped from the factory. On that basis, technicians usually only consider whether the obtained low beam light pattern or high beam light pattern meets the requirements when the low beam or the high beam is turned on separately. However, what technicians ignore is that the high beam light pattern of a vehicle is a result of superimposition of separate low beam light pattern and high beam light pattern on each other, which leads to shifting of an Eₘₐₓ value of the high beam light pattern, and results in failure to meet a requirement that the light brightness at a point of intersection (i.e., an HV point, which is the perpendicular foot of a horizontal line passing through a reference center of the lamp on a light distribution screen) between an H-H axis (a horizontal line passing through the HV point on the light distribution screen, i.e., a horizontal axis of the light distribution screen) and a V-V axis (a vertical line passing through the HV point on the light distribution screen, i.e., a vertical axis of the light distribution screen) of the high beam light pattern may be greater than an Eₘₐₓ value of 80% (the luminance value of the brightest spot within a rectangular range of 5 degrees above, below, on the left of, and on the right of the point of intersection between the H-H axis and the V-V axis) on the light distribution screen; in addition, when the high beam is turned on, both the high beam light source and the low beam light source are turned on, resulting in excessively high power of high beam.

### SUMMARY

A first object of the present disclosure is to provide a vehicle high beam and low beam control system, which can reduce or even prevent the shifting of an Eₘₐₓ value of a high beam light pattern, and is more conducive to meeting a requirement that the brightness of the high beam light pattern at a point of intersection between an H-H axis and a V-V axis may be greater than an Eₘₐₓ value of 80%, and can reduce high beam power when the high beam is turned on.

A second object of the present disclosure is to provide a vehicle high beam and low beam control method, which can reduce or even prevent the shifting of an Eₘₐₓ value of a high beam light pattern, and is more conducive to meeting a requirement that the brightness of the high beam light pattern at a point of intersection between an H-H axis and a V-V axis may be greater than an Eₘₐₓ value of 80%, and can reduce high beam power when the high beam is turned on.

A third object of the present disclosure is to provide a vehicle, which can reduce or even prevent the shifting of an Eₘₐₓ value of a high beam light pattern, and is more conducive to meeting a requirement that the brightness of the high beam light pattern at a point of intersection between an H-H axis and a V-V axis may be greater than an Eₘₐₓ value of 80%, and can reduce high beam power when the high beam is turned on.

In order to achieve the above objects, in a first aspect, the present disclosure provides a vehicle high beam and low beam control system, which comprises a signal receiving module, a light source module and a control module; wherein
the signal receiving module is configured to receive an indication signal for enabling or disabling a high/low beam function, and the control module is connected to the signal receiving module, so as to execute an operation of enabling or disabling the high/low beam function on the basis of the indication signal;
the light source module comprises a low-beam circuit and a high-beam circuit, wherein the low-beam circuit comprises at least one main low-beam circuit for mainly contributing to brightness and at least one secondary low-beam circuit for mainly contributing to broadening;
the control module is connected to the main low-beam circuit, the auxiliary low-beam circuit and the high-beam circuit respectively, and the control module controls the main low-beam circuit and the auxiliary low-beam circuit to switch on and controls the high-beam circuit to switch off when the indication signal received by the signal receiving module is to enable a low beam function; and the control module controls the high-beam circuit and at least one low-beam circuit to switch on and controls at least one main low-beam circuit to switch off when the indication signal received by the signal receiving module is to enable a high beam function.

Preferably, the control module controls the high-beam circuit and the auxiliary low-beam circuit to switch on and controls at least one main low-beam circuit to switch off when the indication signal received by the signal receiving module is to enable the high beam.

Further preferably, the control module comprises a power source and a control circuit, wherein the control circuit comprises a main circuit, a branch circuit and a control switch, and the main circuit connects the power source, the auxiliary low-beam circuit and the main low-beam circuit into a loop, the branch circuit is connected between the main circuit and the power source, the control switch arranged at a junction between the main circuit and the branch circuit; the high-beam circuit is arranged in the branch circuit, one end of the branch circuit is connected between the auxiliary low-beam circuit and the main low-beam circuit or between two main low-beam circuits, and the other end of the branch circuit is connected between the main low-beam circuit and the power source.

Preferably, the low-beam circuit comprises at least two main low-beam circuits and at least two auxiliary low-beam circuits, and the control module controls the high-beam circuit and at least one auxiliary low-beam circuit to switch on and controls at least one auxiliary low-beam circuit and the main low-beam circuits to switch off when the indication signal received by the signal receiving module is to enable the high beam.

Further preferably, the control module comprises a power source and a control circuit, wherein the control circuit comprises a main circuit, a branch circuit and a control switch, and the main circuit connects the power source, the auxiliary low-beam circuit and the main low-beam circuit into a loop, the branch circuit is connected between the main circuit and the power source, the control switch is arranged at a junction between the main circuit and the branch circuit; the high-beam circuit is arranged in the branch circuit, one end of the branch circuit is connected between two auxiliary low-beam circuits, and the other end of the branch circuit is connected between the main low-beam circuit and the power source.

Typically, the control circuit further comprises a thermal protection circuit with a thermal protection resistor arranged therein, and the thermal protection circuit, the thermal protection resistor and the power source form a closed loop.

In a second aspect, the present disclosure provides a vehicle high beam and low beam control method, which comprises:
a light source module comprising a low-beam circuit and a high-beam circuit, wherein the low-beam circuit comprises at least one main low-beam circuit for mainly contributing to brightness and at least one auxiliary low-beam circuit for mainly contributing to broadening;
receiving an indication signal for enabling a high/low beam function and performing an operation for enabling or disabling the high/low beam according to the indication signal, and controlling the main low-beam circuit and the auxiliary low-beam circuit to switch on and controlling the high-beam circuit to switch off when the received indication signal is to enable the low beam; and controlling the high-beam circuit and at least one low-beam circuit to switch on and controlling at least one main low-beam circuit to switch off when the received indication signal is to enable the high beam.

Preferably, the high-beam circuit and the auxiliary low-beam circuit are controlled to switch on and at least one main low-beam circuit is controlled to switch off when the received indication signal is to enable the high beam.

Preferably, the low-beam circuit comprises at least two main low-beam circuits and at least two auxiliary low-beam circuits, and the high-beam circuit and at least one auxiliary low-beam circuit are controlled to switch on and at least one auxiliary low-beam circuit and the main low-beam circuits are controlled to switch off when the received indication signal is to enable the high beam.

In a third aspect, the present disclosure provides a vehicle, which comprises the vehicle high beam and low beam control system according to the first aspect and executes the high beam and low beam control method according to the second aspect.

With the above technical scheme, when the indication signal received by the signal receiving module is to enabling the high beam function, the control module controls the high-beam circuit and at least one low-beam circuit to switch on and controls at least one main low-beam circuit to switch off at the same time, so that the shifting of an Eₘₐₓ value of a high beam light pattern can be reduced or even prevented. Thus, the technical scheme is more conducive to meeting a requirement that the brightness of the high beam light pattern at a point of intersection between an H-H axis and a V-V axis may be greater than an Eₘₐₓ value of 80%, the difference in brightness between the middle and lower part of the high beam light pattern and the upper part of the high beam light pattern can be reduced, thereby driving safety can be ensured.

Other advantages of the present disclosure and the technical effects of preferred embodiments will be further detailed below in embodiments.

### BRIEF DESCRITION OF THE DRAWINGS

Fig. 1 is a schematic hardware diagram of an embodiment of the present disclosure;
Fig. 2 is a schematic diagram of the illuminance of a high beam on a light distribution screen in the prior art;
Fig. 3 is a schematic diagram of the illuminance of a high beam on a light distribution screen according to an embodiment of the present disclosure;
Fig. 4 is a schematic diagram of the illuminance of a low beam light pattern;
Fig. 5 is a schematic diagram of the illuminance of a high beam light pattern;
Fig. 6 is a schematic diagram of the illuminance of a primary low beam light pattern;
Fig. 7 is a schematic diagram of the illuminance of a secondary low beam light pattern;
Fig. 8 is a schematic diagram of the illuminance of the light pattern of one of left and right primary low beam lamps;
Fig. 9 is a schematic diagram of the illuminance of the light pattern of the other of left and right primary low beam lamps;
Fig. 10 is a schematic diagram of the illuminance of the light pattern of one of left and right secondary low beam lamps; and
Fig. 11 is a schematic diagram of the illuminance of the light pattern of the other of left and right secondary low beam lamps.

### Reference Numerals

1 - main low-beam light source; 2 - high beam-light source; 3 - auxiliary low-beam light source; 4 - power source; 5 - control switch; 6 - thermal protection resistor.

### DETAILED DESCRIPTION

Some embodiments of the present disclosure will be described in detail below with reference to the accompanying drawings. However, it may be understood that the embodiments described herein are only intended to explain and interpret the present disclosure, and the scope of protection of the present disclosure is not limited to those embodiments.

Furthermore, in the present disclosure, it may be noted that the terms "install" and "connect" shall be interpreted in their general meanings, for example, a connection may be a fixed connection, a detachable connection, or an integral connection; may be a direct connection or an indirect connection via an intermediate medium, or internal communication between two elements or interaction between two elements, unless otherwise specified and defined explicitly. Those having ordinary skills in the art may interpret the specific meanings of the terms in the present disclosure in their context.

As a basic embodiment of the present disclosure, a vehicle high beam and low beam control system is provided. The vehicle high beam and low beam control system comprises a signal receiving module, a light source module and a control module, wherein the signal receiving module is adapted to receive an indication signal for enabling or disabling a high/low beam function, and the control module is connected to the signal receiving module, so as to execute an operation of enabling or disabling the high/low beam function on the basis of the indication signa; the light source module comprises a low-beam circuit and a high-beam circuit. The low-beam circuit comprises at least one main low-beam circuit and at least one auxiliary low-beam circuit, wherein the main low-beam circuit is used for mainly contributing to brightness and the auxiliary low-beam circuit is used for mainly contributing to broadening; each main low-beam circuit comprises at least one main low-beam light source 1, each auxiliary low-beam circuit comprises at least one auxiliary low-beam light source 3, and each high-beam circuit comprises at least one high-beam light source 2; the control module is connected to the main low-beam circuit, the auxiliary low-beam circuit and the high-beam circuit respectively, and the control module controls the main low-beam circuit and the auxiliary low-beam circuit to switch on and controls the high-beam circuit to switch off when the indication signal received by the signal receiving module is to enable a low beam function; and the control module controls the high-beam circuit and at least one low-beam circuit to switch on and controls at least one main low-beam circuit to switch off when the indication signal received by the signal receiving module is to enable a high beam function.

According to the present disclosure, the signal receiving module may be a signal receiving device built in the vehicle lamp; the vehicle sends a corresponding signal for enabling or disabling a high/low beam function to the signal receiving module; the signal transmitting device may be any feasible signal transmitting device in the prior art, such as a high/low beam controller arranged on the steering wheel, and the signal for enabling or disabling the high/low beam is inputted to the signal receiving module by pushing the high/low beam controller up and down.

According to the present disclosure, the main low-beam circuit may be configured into a plurality of main low-beam circuits, and each of the main low-beam circuits is provided with at least one main low-beam light source 1. In the actual control process, one of the plurality of main low-beam circuits may be controlled to switch off, or several main low beam circuits may be controlled to switch off. The low-beam circuit that is switched on may be an auxiliary low-beam circuit, or may be an auxiliary low-beam circuit and a main low-beam circuit.

When the vehicle high beam and low beam control system provided in the above basic embodiment operates, the vehicle sends an indication signal for enabling or disabling a high/low beam function, and the signal receiving module of the vehicle high beam and low beam control system receives the indication signal for enabling or disabling the high/low beam function; the control module controls the low-beam circuit to switch on and controls the high-beam circuit to switch off when the indication signal received by the signal receiving module is to enable a low beam function; and the control module controls the high-beam circuit and at least one low-beam circuit to switch on and controls at least one main low-beam circuit to switch off when the indication signal received by the signal receiving module is to enable a high beam function.

In the vehicle high beam and low beam control system provided in the above basic embodiment, the control module controls the high-beam circuit and at least one low-beam circuit to switch on, and controls at least one main low-beam circuit to switch off when the indication signal received by the signal receiving module is to enable the high beam function. In that state, the total power is the power consumed by one of the low-beam circuit and the high-beam circuit that has higher power, and the total power is lower than the power consumed by a traditional circuit in which both the high-beam light source and the low-beam light source are switched on when the high beam function is turned on. In addition, when the high beam function is enabled, the shifting of an Eₘₐₓ value of a high beam light pattern obtained by projection is reduced, or even the Eₘₐₓ value of the high beam light pattern obtained by projection has no shifting. Thus, it is more conducive to meeting a regulatory requirement that the brightness of the high beam light pattern at a point of intersection between an H-H axis and a V-V axis may be greater than an Eₘₐₓ value of 80%.

The Eₘₐₓ value refers to the illuminance of the brightest spot within a rectangular range of 5 degrees above, below, on the left of, and on the right of the point of intersection between the H-H axis and the V-V axis on the light distribution screen, and the light distribution screen refers to a vertical screen at a distance of 25 meters in front of the vehicle.

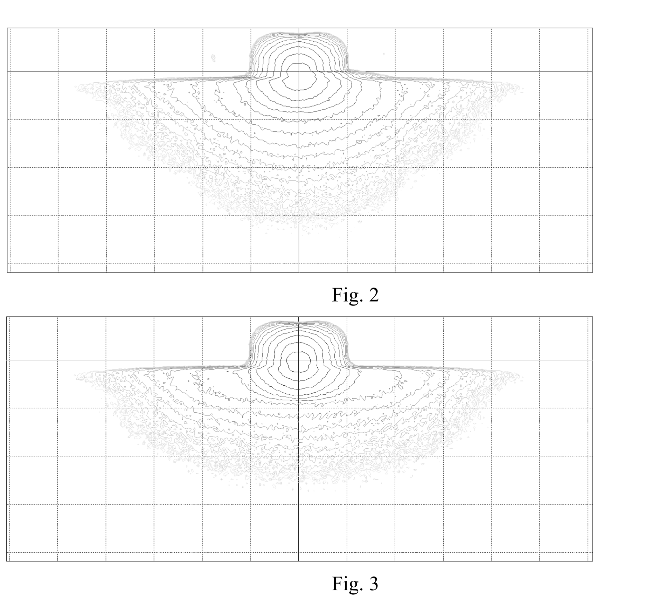

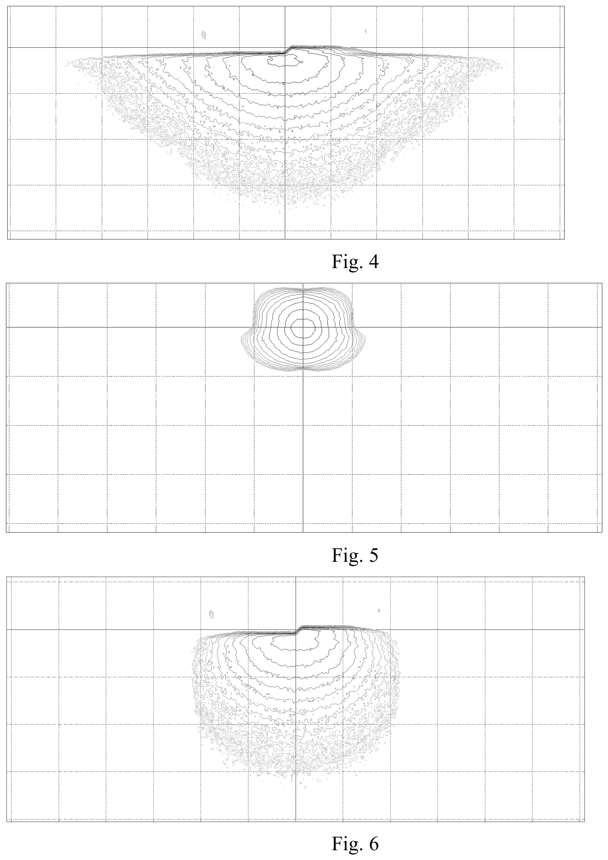

When the high beam function is turned on, a light pattern formed by superimposition of the high beam light pattern and the low beam light pattern will be obtained on the light distribution screen (as shown in Fig. 3). However, the Eₘₐₓ value of the high beam may shift easily when the low beam light pattern and the high beam light pattern (Fig. 5) are superimposed, and the brightness of the high beam light pattern at a point of intersection between the H-H axis and the V-V axis may not meet a regulatory requirement that specifies that the brightness may be greater than an Eₘₐₓ value of 80%, because the illuminance of the low beam light pattern in an area close to the point of intersection between the H-H axis and V-V axis (i.e., a central area of the low beam light pattern) is higher (Fig. 4), the illuminance at the measurement point 75R may meet a minimum value as specified in applicable laws and regulations, and a cutoff line of the low beam light pattern has an asymmetrical feature (lower on the left and higher on the right, as shown in Fig. 4). That is a problem always ignored by technicians.

Based on the above reasons, in the present disclosure, when the high beam function is enable, some or all of the main low-beam circuits are selectively switched off, so as to reduce or even prevent the shifting of the Eₘₐₓ value of the high beam. Thus, it is more conducive to meeting the regulatory requirement that the brightness of the high beam light pattern at the point of intersection between the H-H axis and the V-V axis may be greater than an Eₘₐₓ value of 80%. In addition, the high beam power can be reduced by switching off some of the main low-beam circuits, without affecting the illumination requirement for the vehicle lamps.

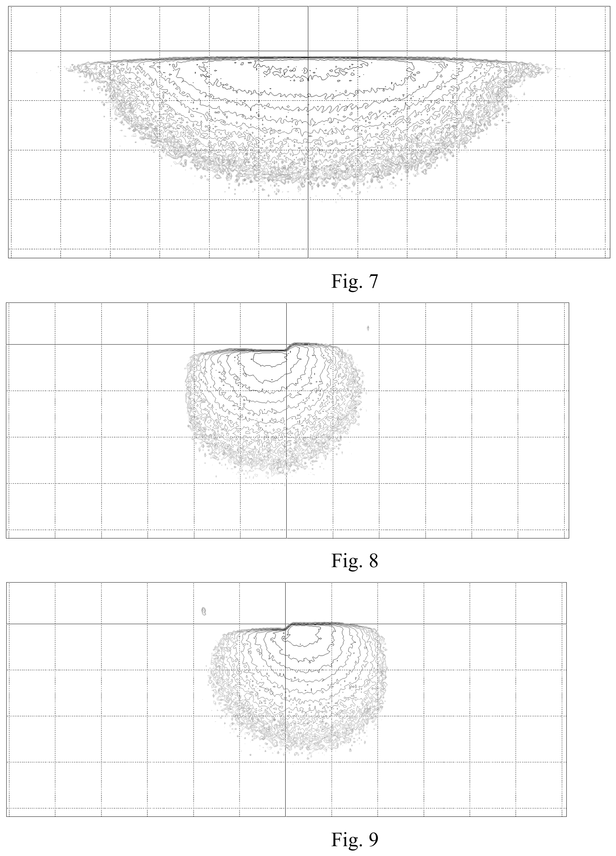

In a specific embodiment of the present disclosure, the low-beam circuit comprises at least two main low-beam circuits and at least two auxiliary low-beam circuits, and accordingly, each main low-beam circuit is provided with at least one main low-beam light source 1, and each auxiliary low-beam circuit is provided with at least one auxiliary low-beam light source 3; the control module controls the main low-beam circuits and the auxiliary low-beam circuits to switch on when the indication signal received by the signal receiving module is to enable the low beam; the control module controls the high-beam circuit and the auxiliary low-beam circuits to switch on and controls the main low-beam circuits to switch off, or the control module controls the high-beam circuit, the auxiliary low-beam circuits and at least one main low-beam circuit to switch on and controls at least one main low-beam circuit to switch off, or the control module controls the high-beam circuit and at least one auxiliary low-beam circuit to switch on and controls the main low-beam circuits and at least one auxiliary low-beam circuit to switch off, when the indication signal received by the signal receiving module is to enable the high beam. When the high beam function is enabled, the high beam power can be reduced by switching off some of the main low-beam circuits, or switching off all of the main low-beam circuits, or switching off all of the main low-beam circuits and some of the auxiliary low-beam circuits. After the main low beam light pattern (as shown in Fig. 6) and the auxiliary low beam light pattern (as shown in Fig. 7) obtained by projection of the light emitted by the main low-beam light source 1 and the auxiliary low-beam light source 3 are superimposed with the high beam light pattern, the superimposition area is partially located in an Eₘₐₓ value test area (i.e., a rectangular range of 5 degrees above, below, on the left of and on the right of a point of intersection between the H-H axis and the V-V axis on the light distribution screen). On that basis, in order to prevent the Eₘₐₓ value of the high beam from shifting so that the brightness of the high beam light pattern at the point of intersection between the H-H axis and the V-V axis can't meet the regulatory requirement that specifies that the brightness may be greater than an Eₘₐₓ value of 80%, we can choose to switch off some of the main low-beam circuits, or switch off all of the main low-beam circuits, or switch off all of the main low-beam circuits and some of the auxiliary low-beam circuits. In some specific implementations, the switch-on and switch-off of the main low-beam circuits and the auxiliary low-beam circuits are determined based on the corresponding relationship between the main low-beam circuits and the auxiliary low-beam circuits and the superimposition area when the high beam is to be enabled. Specifically, a plurality of quasi-low beam light patterns can be obtained according to the switch-on and switch-off of the main low-beam circuits and the auxiliary low-beam circuits. As a specific embodiment of the present disclosure, switching off the main low-beam circuit and/or the auxiliary low-beam circuit that corresponds to the quasi-low beam light pattern with the largest light pattern area is used as the setting for the low-beam circuits when the high-beam is to be enabled. The present disclosure is not limited to that. More situations of determining the switch-on and switch-off of the main low-beam circuits and the auxiliary low-beam circuits when the high-beam is enabled are possible in the present disclosure, and will not be further detailed herein. Usually, below the H-H axis, the above setting can further reduce the downward shifting of the Eₘₐₓ value of the high beam light pattern, so that the high beam light pattern meets the requirement that the brightness of the high beam light pattern at the HV point of light beam (the point of intersection between the H-H axis and the V-V axis) may be greater than an Eₘₐₓ value of 80%.

According to the present disclosure, the auxiliary low-beam circuit may be configured into a plurality of auxiliary low-beam circuits, and each of the auxiliary low-beam circuits is provided with at least one auxiliary low-beam light source 3. In the actual control process, one of the plurality of auxiliary low-beam circuits may be controlled to switch off, or several auxiliary low-beam circuits may be controlled to switch off.

In a preferred embodiment of the present disclosure, the low-beam circuit comprises at least one main low-beam circuit and at least one auxiliary low-beam circuit, and accordingly, the main low-beam circuit is provided with at least one main low-beam light source 1, and the auxiliary low-beam circuit is provided with at least one auxiliary low-beam light source 3; the control module controls the main low-beam circuit and the auxiliary low-beam circuit to switch on when the indication signal received by the signal receiving module is to enabled the low beam; and the control module controls the high-beam circuit and at least one auxiliary low-beam circuit to switch on and controls at least one main low-beam circuit to switch off when the indication signal received by the signal receiving module is to enable the high beam.

When the low beam light pattern and the high beam light pattern are superimposed, only the main low-beam light source 1 may be switched off to reduce or prevent the shifting of the Eₘₐₓ value of the high beam, because in the low beam light pattern, the main low-beam light source 1 mainly contributes to brightness and the auxiliary low-beam light source 3 mainly contributes to broadening, and the higher illuminance in the central area of the low beam light pattern is mainly contributed by the main low-beam light source 1.

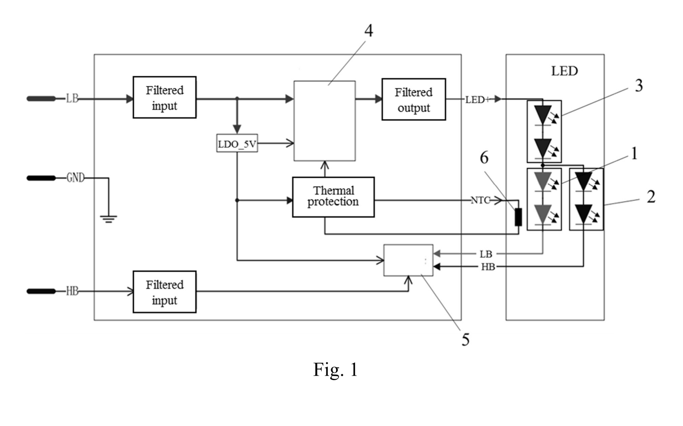

In a specific embodiment of the present disclosure, as shown in Fig. 1, the control module comprises a power source 4 and a control circuit, wherein the control circuit comprises a main circuit connecting the power source 4, the auxiliary low-beam circuit and the main low-beam circuit into a loop, a branch circuit connected between the main circuit and the power source 4, and a control switch 5 arranged at a junction between the main circuit and the branch circuit; the high-beam circuit is arranged in the branch circuit, one end of the branch circuit is connected between the main low-beam circuit and the auxiliary low-beam circuit or between two main low-beam circuits, and the other end of the branch circuit is connected to a first terminal of the control switch 5, a second terminal of the control switch 5 is connected to the main low beam circuit, and a third terminal of the control switch 5 is connected to the power source 4. In the operating process, the third terminal of the control switch 5 may be conducted to the second terminal, so that the auxiliary low-beam circuit and the main low-beam circuit are in one closed loop; alternatively, the first terminal of the control switch 5 may be connected to the third terminal of the control switch 5, so that the auxiliary low-beam circuit and the high-beam circuit are in a closed loop, or the auxiliary low-beam circuit, the high-beam circuit and some of the main low-beam circuits are in a closed loop. In another embodiment, one end of the branch circuit may be connected between two auxiliary low-beam circuits. Fig. 1 only schematically shows a hardware structure of the present disclosure, but the present disclosure is not limited to that. Any other circuit structure that can realize the circuit control in the present disclosure is within the scope of protection of the present disclosure.

Specifically, in the case that only the main low-beam light sources 1 are switched off when the high beam is enable, one end of the branch circuit is connected between the main low-beam circuit and the auxiliary low-beam circuit, or between two main low-beam circuits or between two auxiliary low-beam circuits, and the other end of the branch circuit is connected to the control switch 5, and the control switch 5 is arranged between the main low-beam circuit and the power source 4 or between the high-beam circuit and the power source 4. In the case that not only the main low-beam light sources 1 but also some of the auxiliary low-beam light sources 3 are switched off when the high beam is enabled, one end of the branch circuit is connected between two auxiliary low-beam circuits, and the other end of the branch circuit is connected to the control switch 5. The control switch 5 may be a single-pole double-throw switch or two separate switches. When the low beam is to be enabled, the control switch 5 switches on the main circuit through which the power source 4, the auxiliary low-beam light source 3 and the main low-beam light source 1 are routed, while switching off the branch circuit. When the high beam is to be enabled, the control switch 5 switches on a part of the main circuit through which the power source 4 is routed and the branch circuit through which the high-beam light source 2 is routed, and switches off a part of the main circuit where at least one main low-beam light source 1 is located.

The control module provided above can realize switching between high beam and low beam as mentioned in the present disclosure, and has a simple structure, and consumes less power than a traditional circuit in which both the high beam light sources and the low-beam light sources are switched on when the high beam is enabled. Besides, it can reduce or prevent the shifting of the Eₘₐₓ value of the high beam light pattern, so that the high beam light pattern meets the requirement that the brightness of the high beam light pattern at the point of intersection between the H-H axis and the V-V axis may be greater than an Eₘₐₓ value of 80%.

In a preferred embodiment of the present disclosure, one end of the branch circuit is connected between the main low-beam circuit and the auxiliary low-beam circuit, and the other end of the branch circuit is connected to the control switch 5, and the control switch 5 is arranged between the main low-beam circuit and the power source 4 or between the high-beam circuit and the power source 4. When the high beam is enabled, all the main low-beam light sources 1 can be controlled in an off state, while the auxiliary low-beam light sources 3 can be controlled in an on state. Thus, the shifting of the Eₘₐₓ value of the high beam light pattern can be prevented while the high beam power is reduced, so that the requirement that the brightness of the high beam light pattern at the point of intersection between the H-H axis and the V-V axis may be greater than an Eₘₐₓ value of 80% can be met.

In a specific embodiment of the present disclosure, the control circuit further comprises a thermal protection circuit with a thermal protection resistor 6 arranged therein, and the thermal protection circuit, the thermal protection resistor 6 and the power source form a closed loop. With the thermal protection resistor 6, the power source 4 can be protected, thereby the service life of the vehicle lamps can be prolonged.

As a relatively preferred embodiment of the control system in the present disclosure, as shown in Fig. 1, the control system comprises a signal receiving module, a light source module and a control module, wherein the signal receiving module is adapted to receive an indication signal for enabling or disabling a high/low beam function, and the control module is connected to the signal receiving module to perform an operation of enabling or disabling the high/low beam according to the indication signal; the light source module comprises a main low-beam circuit, a high-beam circuit and an auxiliary low-beam circuit, wherein at least two main low-beam light sources 1 are arranged in the main low-beam circuit, at least two high-beam light sources 2 are arranged in the high-beam circuit, and at least two auxiliary low-beam light sources 3 are arranged in the auxiliary low-beam circuit; the control module comprises a power source 4 and a control circuit, wherein the control circuit comprises a thermal protection circuit for protecting the power source 4, a main circuit connecting the power source 4, the auxiliary low-beam circuit and the main low-beam circuit into a loop, a branch circuit connected between the main circuit and the power source 4, and a control switch 5 arranged at a junction between the main circuit and the branch circuit; a thermal protection resistor 6 is arranged in the thermal protection circuit, and the thermal protection circuit, the thermal protection resistor 6 and the power source 4 form a closed loop; the high-beam light source 2 is arranged in the branch circuit, one end of the branch circuit is connected between the main low-beam circuit and the auxiliary low-beam circuit, and the other end of the branch circuit is connected to the control switch 5, and the control switch 5 is arranged between the main low-beam circuit and the power source 4 or between the high-beam circuit and the power source 4. Of course, one end of the branch circuit may be connected in the main low-beam circuit (i.e., between two main low-beam light sources 1) or in the auxiliary low-beam circuit (i.e., between two auxiliary low-beam light sources 1), and the other end of the branch circuit is connected to the control switch 5, and the control switch 5 is arranged between the main low-beam circuit and the power source 4 or between the high-beam circuit and the power source 4. This arrangement will not be detailed further herein.

According to the present disclosure, in Fig. 1, LB represents a low beam signal, HB represents a high beam signal, GND represents the grounding terminal of a wire, NTC represents a thermal sensitive circuit, and LDO_5V represents a 5V LDO power source chip.

In the embodiment shown in Fig. 1, when two main low-beam light sources 1 are enabled, the corresponding light patterns obtained by light projection are shown in Figs. 8 and 9, a superimposed main low beam light pattern is shown in Fig. 6, and the superimposed light pattern meets a regulatory requirement for the illuminance at a measurement point in the low beam area.

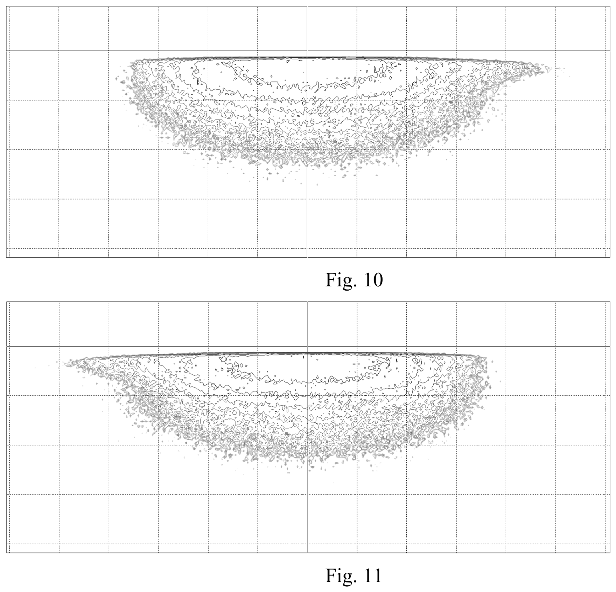

When two auxiliary low-beam light sources 3 are enabled, the corresponding light patterns obtained by light projection are shown in Figs. 10 and 11, and a superimposed light pattern is shown in Fig. 7, and the superimposed light pattern meets a regulatory requirement for the illumination range of the low beam light pattern, i.e., a regulatory requirement for broadening.

A final low beam light pattern obtained by superimposing two superimposed light patterns is shown in Fig. 4, and the final low beam light pattern is superimposed with the high beam light pattern shown in Fig. 5 to obtain a light pattern shown in Fig. 2 when the high beam is enabled. The obtained light pattern has a problem that the Eₘₐₓ value of the high beam is shifted. If only the auxiliary low beam light pattern shown in Fig. 7 is superimposed with the high beam light pattern shown in Fig. 5, a light pattern shown in Fig. 3 can be obtained when the high beam is enabled, and the Eₘₐₓ value of the high beam in this light pattern is essentially not shifted. It is more conducive to meeting the requirement that the brightness of the high beam light pattern at the point of the intersection between the H-H axis and the V-V axis may be greater than an Eₘₐₓ value of 80%; besides, the high beam power is significantly reduced when the high beam is enabled, since the main low-beam light source 1 is not involved.

With the above arrangement, switching between high beam and low beam can be realized simply by adjusting the opening/closing of the control switch 5 in the actual process of use. Besides, the system can essentially prevent the Eₘₐₓ value of the high beam light pattern from shifting (a high beam light pattern obtained without using the method in the present disclosure is shown in Fig. 2, and a high beam light pattern obtained using the method in the present disclosure is shown in Fig. 3). Thus, the system is more conducive to meeting the requirement that the brightness of the high beam light pattern at the point of intersection between the H-H axis and the V-V axis may be greater than an Eₘₐₓ value of 80%, and can reduce high beam power when the high beam is turned on.

In a second basic embodiment, the present disclosure provides a vehicle high beam and low beam control method, which comprises:
a light source module comprising a low-beam circuit and a high-beam circuit, wherein the low-beam circuit comprises at least one main low-beam circuit and at least one auxiliary low-beam circuit, wherein the main low-beam circuit is used for mainly contributing to brightness and the auxiliary low-beam circuit is used for mainly contributing to broadening; receiving an indication signal for enabling or disabling the high/low beam and performing an operation of enabling or disabling the high/low beam according to the indication signal, and controlling the main low-beam circuit and the auxiliary low-beam circuit to switch on and controlling the high-beam circuit to switch off when the received indication signal is to enable the low beam; and controlling the high-beam circuit and at least one low-beam circuit to switch on and controlling at least one main low-beam circuit to switch off when the received indication signal is to enable the high beam.

The vehicle high beam and low beam control method provided by the present disclosure can be realized based on the vehicle high beam and low beam control system described above.

According to the vehicle high beam and low beam control method provided in the above basic embodiment of the present disclosure, when the received instruction signal is to enable the high beam, the high-beam circuit and at least one low-beam circuit are controlled to switch on, and at least one main low-beam circuit is controlled to switch off, so that the shifting of the Eₘₐₓ value of the high beam light pattern can be reduced or even prevented, it is more conducive to meeting the requirement that the brightness of the high beam light pattern at the point of intersection between the H-H axis and the V-V axis may be greater than an Eₘₐₓ value of 80%, and the high beam power can be reduced when the high beam is enabled.

In a specific embodiment of the present disclosure, the low-beam circuit comprises a main low-beam circuit and an auxiliary low-beam circuit, and the main low-beam circuit and the auxiliary low-beam circuit are controlled to switch on when the received indication signal is to enable the low beam; at least one main low-beam circuit is controlled to switch off when the received indication signal is to enable the high beam. Thus, the shifting of the Eₘₐₓ value of the high beam light pattern can be reduced or even prevented, so that the high beam light pattern meets the requirement that the brightness of the high beam light pattern at the point of intersection between the H-H axis and the V-V axis may be greater than an Eₘₐₓ value of 80%.

As a preferred embodiment of the present disclosure, when the received information is to enable the high beam, the main low-beam circuit is controlled to switch off. That is to say, all the main low-beam light sources 1 are controlled to switch off; thus, the shifting of the Eₘₐₓ value of the high beam light pattern can be prevented better, and the high beam light pattern meets the requirement that the brightness of the high beam light pattern at the point of intersection between the H-H axis and the V-V axis may be greater than an Eₘₐₓ value of 80%.

As a relatively preferred embodiment of the control method in the present disclosure, the main low-beam circuit comprises at least two main low-beam light sources 1, the high-beam circuit comprises at least two high-beam light sources 2, and the auxiliary low-beam circuit comprises at least two auxiliary low-beam light sources 3; an indication signal for enabling or disabling the high/low beam is received and an operation of turning on or off the high/low beam is performed according to the indication signal; the main low-beam circuit and the auxiliary low-beam circuit are controlled to switch on and the high-beam circuit is controlled to switch off, i.e., the main low-beam light sources 1 and the auxiliary low-beam light sources 3 are controlled to switch on and the high-beam light source 2 is controlled to switch off, when the received indication signal is to enable the low beam; the high-beam circuit and the auxiliary low-beam circuit are controlled to switch on and the main low-beam circuit is controlled to switch off, i.e., the high-beam light source 2 and the auxiliary low-beam light sources 3 are controlled to switch on and the main low-beam light sources 1 are controlled to switch off, when the received indication signal is to enable the high beam. In another embodiment, at least one auxiliary low-beam circuit is controlled to switch off when the received indication signal is to enable the high beam.

With the control method provided in the above preferred embodiment, the shifting of the Eₘₐₓ value of the high beam light pattern can be prevented better, it is more conducive to meeting the requirement that the brightness of the high beam light pattern at the point of intersection between the H-H axis and the V-V axis may be greater than an Eₘₐₓ value of 80%, and the high beam power can be reduced.

As a third basic embodiment of the present disclosure, a vehicle is provided, and the vehicle comprises the vehicle high beam and low beam control system according to any of the above embodiments, and executes the low beam and high beam control method according to any of the above embodiments. The vehicle has all the advantages of the above-mentioned vehicle high beam and low beam control system and vehicle high beam and low beam control method, and it will not be further detailed herein.

While some preferred embodiments of the present disclosure are described above with reference to the accompanying drawings, the present disclosure is not limited to the details in those embodiments. Those skilled in the art can make various simple modifications and variations to the technical scheme of the present disclosure, without departing from the technical concept of the present disclosure. However, all these simple modifications and variations shall be deemed as falling in the scope of protection of the present disclosure.

In addition, it may be noted that the specific technical features described in above specific embodiments may be combined in any appropriate form, provided that there is no conflict among them. To avoid unnecessary repetition, various possible combinations are not described specifically in the present disclosure.

Moreover, different embodiments of the present disclosure may also be combined freely as required, as long as the combinations don't deviate from the ideal of the present disclosure. However, such combinations shall also be deemed as being disclosed in the present disclosure.

## Claims

1. A vehicle high beam and low beam control system, **characterized in that** comprising a signal receiving module, a light source module, and a control module, wherein
the signal receiving module is configured to receive an indication signal for enabling or disabling a high/low beam function, and the control module is connected to the signal receiving module, so as to execute an operation of enabling or disabling the high/low beam function on the basis of the indication signal;
the light source module comprises a low-beam circuit and a high-beam circuit, and the low-beam circuit comprises at least one main low-beam circuit for mainly contributing to brightness and at least one an auxiliary low-beam circuit for mainly contributing to broadening;
the control module is connected to the main low-beam circuit, the auxiliary low-beam circuit and the high-beam circuit respectively, and the control module controls the main low-beam circuit and the auxiliary low-beam circuit to switch on and controls the high-beam circuit to switch off when the indication signal received by the signal receiving module is to enable a low beam function; and the control module controls the high-beam circuit and at least one low-beam circuit to switch on and controls at least one main low-beam circuit to switch off when the indication signal received by the signal receiving module is to enable a high beam function.

2. The vehicle high beam and low beam control system of claim 1, **characterized in that** wherein the control module controls the high-beam circuit and the auxiliary low-beam circuit to switch on and controls at least one main low-beam circuit to switch off when the indication signal received by the signal receiving module is to enable the high beam.

3. The vehicle high beam and low beam control system of claim 2, wherein the control module comprises a power source and a control circuit, wherein the control circuit comprises a main circuit, a branch circuit and a control switch, and the main circuit connects the power source, the auxiliary low-beam circuit and the main low-beam circuit into a loop, the branch circuit is connected between the main circuit and the power source, the control switch is arranged at a junction between the main circuit and the branch circuit; the high-beam circuit is arranged in the branch circuit, one end of the branch circuit is connected between the auxiliary low-beam circuit and the main low-beam circuit or between two main low-beam circuits, and the other end of the branch circuit is connected between the main low beam circuit and the power source.

4. The vehicle high beam and low beam control system of claim 1, **characterized in that** wherein the low-beam circuit comprises at least two main low-beam circuits and at least two auxiliary low-beam circuits, and the control module controls the high-beam circuit and at least one auxiliary low-beam circuit to switch on and controls at least one auxiliary low-beam circuit and the main low-beam circuits to switch off when the indication signal received by the signal receiving module is to enable the high beam.

5. The vehicle high beam and low beam control system of claim 4, **characterized in that** wherein the control module comprises a power source and a control circuit, wherein the control circuit comprises a main circuit, a branch circuit and a control switch, and the main circuit connects the power source, the auxiliary low-beam circuit and the main low-beam circuit into a loop, the branch circuit is connected between the main circuit and the power source, the control switch is arranged at a junction between the main circuit and the branch circuit; the high-beam circuit is arranged in the branch circuit, one end of the branch circuit is connected between two auxiliary low-beam circuits, and the other end of the branch circuit is connected between the main low-beam circuit and the power source.

6. The vehicle high beam and low beam control system of claim 3 or 5, **characterized in that** wherein the control circuit further comprises a thermal protection circuit with a thermal protection resistor arranged therein, and the thermal protection circuit, the thermal protection resistor and the power source form a closed loop.

7. A vehicle high beam and low beam control method, **characterized in that** comprising:
a light source module comprising a low-beam circuit and a high-beam circuit, wherein the low-beam circuit comprises at least one main low-beam circuit for mainly contributing to brightness and at least one auxiliary low-beam circuit for mainly contributing to broadening;
receiving an indication signal for enabling a high/low beam function and performing an operation for enabling or disabling the high/low beam according to the indication signal, and controlling the main low-beam circuit and the auxiliary low-beam circuit to switch on and controlling the high-beam circuit to switch off when the received indication signal is to enable the low beam; and controlling the high-beam circuit and at least one low-beam circuit to switch on and controlling at least one main low-beam circuit to switch off when the received indication signal is to enable the high beam.

8. The vehicle high beam and low beam control method of claim 7, **characterized in that** wherein controlling the high-beam circuit and the auxiliary low-beam circuit to switch on and controlling at least one main low-beam circuit to switch off when the received indication signal is to enable the high beam.

9. The vehicle high beam and low beam control method of claim 7, **characterized in that** wherein the low-beam circuit comprises at least two main low-beam circuits and at least two auxiliary low-beam circuits, and the high-beam circuit and at least one auxiliary low-beam circuit are controlled to switch on and at least one auxiliary low-beam circuit and the main low-beam circuits are controlled to switch off when the received indication signal is to enable the high beam.

10. A vehicle, **characterized in that** comprising the vehicle high beam and low beam control system of any of claims 1 to 6 and executing the vehicle high beam and low beam control method of any of claims 7 to 9.
